# EUROPÄISCHE PATENTANMELDUNG

(11) **EP 2 860 007 A1**
(43) Veröffentlichungstag der Anmeldung: **15.04.2015**
(21) Anmeldenummer: 14003397.8
(22) Anmeldetag: 01.10.2014
(51) Int. Cl.: B29C 44/28, B29C 44/46, B29C 44/48, B29C 67/24

(54) **Verfahren zum kontinuierlichen Herstellen eines Stranges aus Reaktivkunststoff**

(30) Priorität: 09.10.2013 DE 102013016661
(71) Anmelder: Hennecke GmbH, 53757 Sankt Augustin (DE)
(72) Erfinder: Schamberg, Martin, 53757 Sankt Augustin (DE); Wendt, Marc, 53693 Königswinter (DE)
(74) Vertreter: Gosdin, Michael

(57) **Zusammenfassung**

Verfahren zum kontinuierlichen Herstellen eines Stranges aus Reaktivkunststoff, a) bei dem zunächst zwei Reaktivkomponenten dosiert einem Mischer (1) zugeführt werden, b) bei dem dann diese im Mischer (1) vermischt werden, c) bei dem anschließend das Gemisch über ein Verteilorgan (2) ausgetragen wird und d) bei dem ein kontinuierlich in eine Förderrichtung (T) geförderter erster Bahnabschnitt (5) mit dem Reaktivgemisch benetzt wird. Um auch bei sich ändernden Fertigungsparametern die Qualität des Stranges möglichst konstant zu halten, ist vorgesehen, dass der zu benetzende Bahnabschnitt (5) im Bereich der Benetzung mit Reaktivgemisch entlang einer ersten Ebene (E₁) verläuft, die gegenüber der horizontalen Ebene um mindestens 60° geneigt ist, und dass die Geschwindigkeitskomponente (vᵥ) des Geschwindigkeitsvektors des zu benetzenden erste Bahnabschnitts (5) in Richtung der Erdbeschleunigung (g) positiv ist.

## Beschreibung

Die Erfindung betrifft ein Verfahren zum kontinuierlichen Herstellen eines Stranges aus Reaktivkunststoff,
a) bei dem zunächst mindestens zwei Reaktivkomponenten, insbesondere Polyol und Isocyanat, dosiert einem Mischer zugeführt werden,
b) bei dem dann die Reaktivkomponenten im Mischer zu einem Reaktivgemisch vermischt werden,
c) bei dem anschließend das Reaktivgemisch über mindestens ein Verteilorgan in die Umgebungsatmosphäre ausgetragen wird und
d) bei dem ein kontinuierlich in eine Förderrichtung geförderter erster Bahnabschnitt aus einem flächigen, flexiblen Material, insbesondere eine Papier-, Folien- oder Gewebebahn, mit dem Reaktivgemisch benetzt wird, wobei das mindestens eine Verteilorgan den ersten Bahnabschnitt in einer Richtung quer zur Förderrichtung über eine vorgegebene Breite benetzt.

Ein solches Verfahren ist in der DE 10 2006 051 311 A1 offenbart. Dieses Verfahren kann für verschiedene Anwendungen eingesetzt werden, beispielsweise für die Herstellung von flexiblem Blockweichschaum, von geschlossenzelligem Blockhartschaum, von Isolierpanels und von Halbzeugen aus thermoplastischem Polyurethan. Das Verfahren kann auf einer Vielzahl von Anlagen mit unterschiedlichen Anlagenkonzepten durchgeführt werden. Beispiele solcher Anlagen sind kontinuierlich arbeitende Blockschaumanlagen sowohl für flexible Schaumsysteme als auch für Hartschaumsysteme.

Das genannte Verfahren eignet sich darüber hinaus auch für die kontinuierliche Erzeugung von Sandwichpanels oder Isolierplatten auf sogenannten Doppelplattenbandanlagen.

Ähnliche Lösungen zeigen die DE 33 18 392 A1, die DE 103 43 745 A1**,** die EP 2 614 944 A1 und die EP 1 846 212 B1**.** Bei der genannten DE 33 18 392 A1 wird zwar auch eine leicht schräge Anordnung des Bahnabschnitts vorgesehen, auf dem das Polyurethangemisch aufgebracht werden soll, allerdings ist hier nur eine geringfügige Neigung, bevorzugt zwischen 10° und 30° vorgesehen. Das Austragsorgan für das Polyurethan oszilliert bei dieser Lösung in typischer Weise quer zur Förderrichtung des Bahnabschnitts.

Eine immer wiederkehrende Aufgabenstellung bei solchen Anlagen bzw. den entsprechenden Verfahren ist der optimale Auftrag des Reaktivgemisches auf das Substrat (d. h. auf das in Förderrichtung geförderte Bandmaterial bzw. den Bahnabschnitt), welches die Anlagenkomponenten davor schützt, dass sie mit Reaktivgemisch verschmutzt werden. Hinsichtlich der Auftragstechnik sind dabei verschiedene Aspekte zu berücksichtigen:
Zunächst sollten keine Luftblasen in das Reaktivgemisch eingeschlagen werden.

Weiterhin muss die Auftragstechnik eine Verteilung des Reaktivgemisches über die gesamte Produktionsbreite (d. h. Breite des Substrats bzw. Bahnabschnitts) gewährleisten.

Dabei sollte ferner eine möglichst homogene Altersverteilung des Reaktivgemisches über die Produktionsbreite gewährleistet sein.

Vor dem Hintergrund, dass es sich bei dem Reaktivgemisch in der Regel um Material mit guten Klebeeigenschaften handelt, sollten - nachdem das Reaktivgemisch in die Umgebungsatmosphäre ausgetragen wurde - möglichst keine stationären Anlagenteile vom Reaktivgemisch benetzt werden, um so eine möglichst lange und zuverlässige Produktion der Anlage gewährleisten zu können.

In der US 2005/0222289 A1 ist ein Verfahren beschrieben, bei dem das Reaktionsgemisch über mehrere Breitschlitzdüsen oder in Form von mehreren Einzelstrahlen auf ein horizontal verlaufendes Substrat aufgetragen wird.

Beide Verfahrensalternativen haben den prinzipiellen Nachteil, dass die erzielte Breite der Benetzung des Substrats durch die Erdbeschleunigung beeinflusst wird. Nur bei sehr schnellen Austrittsgeschwindigkeiten zu den Seiten landet der äußere Strahl bzw. das äußere Ende des Strahls auf der Breite, bei welcher der äußere Geschwindigkeitsvektor des austretenden Düsenstrahls auf das horizontal verlaufende Substrat trifft. Dadurch muss bei jeder Mengenänderung entweder die Höhe des Austrittsorgans oder aber die Düsengeometrie angepasst werden. Insbesondere ist es praktisch unmöglich, mit dem gleichen Austragsorgan eine gleichmäßige Mengenverteilung über der Breite bei verschiedenen Austrittsmengen zu erzielen. Es ist im Prinzip stets eine Anpassung notwendig, da die äußeren Strahlanteile aufgrund der größeren Flugweite und Flugdauer stärker von der Erdbeschleunigung beeinflusst werden als die mittleren Strahlanteile.

Ein weiteres gattungsmäßiges Verfahren ist in der EP 1 857 248 A2 beschrieben. Hier wird jedoch die Verteilung im Wesentlichen dadurch erzielt, dass das Reaktivgemisch über Schläuche auf gleichmäßig über der Breite angeordnete Austragsorgane verteilt wird, welche selbst dann jedoch keine nennenswerte Breitenverteilung mehr bewirken. Deshalb ist es in diesem Fall auch unerheblich, ob das Gemisch auf ein im Wesentlichen horizontal verlaufendes Substrat oder auf ein im Wesentlichen vertikal verlaufendes Substrat ausgetragen wird.

Das Problem an dieser Verfahrensweise besteht darin, dass das zum Einsatz kommende System mit der Zeit zuwachsen kann, wenn innerhalb der Schläuche nicht relativ hohe Strömungsgeschwindigkeiten vorliegen. Dies jedoch führt in der Regel zu hohen Mischkammerdrücken, die insbesondere bei Anwendungen im Bereich des flexiblen Blockweichschaums dazu führen, dass der Schaum sehr grobzellig wird, da eine ausreichende Nukleierung in der Regel nur bei niedrigen Mischkammerdrücken unterhalb von 1 bar erzielt werden kann.

Ein weiteres gattungsmäßiges Verfahren wird in der DE 26 31 145 C2 beschrieben. Hier wird das Reaktionsgemisch nach einer Verteilung über ein Geweih zunächst einer weiteren Vorverteilung mit Hilfe einer Rinne oder ähnlichem unterzogen. Der wesentliche Nachteil dieses Verfahrens ist darin zu sehen, dass diese Rinne nicht mit einem kontinuierlich bewegten Substrat bedeckt ist, so dass sich in diesem Bereich sehr leicht Reaktionsgemisch aufbauen kann.

Der Erfindung liegt daher die Aufgabe zugrunde, ein gattungsgemäßes Verfahren so fortzubilden, dass die genannten Aspekte verglichen mit den vorbekannten Maßnahmen verbessert realisiert werden können. Demgemäß soll insbesondere auch bei sich ändernden Fertigungsparametern die Qualität des herzustellenden Stranges möglichst konstant und die Anlage sauber gehalten werden können.

Die Lösung dieser Aufgabe durch die Erfindung ist dadurch gekennzeichnet, dass der zu benetzende erste Bahnabschnitt im Bereich der Benetzung mit Reaktivgemisch entlang einer ersten Ebene verläuft, die gegenüber der horizontalen Ebene um mindestens 60° geneigt ist, und dass die Geschwindigkeitskomponente des Geschwindigkeitsvektors des zu benetzenden ersten Bahnabschnitts in Richtung der Erdbeschleunigung im Bereich der Benetzung mit Reaktivgemisch positiv ist.

Die erste Ebene ist dabei bevorzugt gegenüber der horizontalen Ebene um mindestens 65° geneigt, besonders bevorzugt um mindestens 75°. In vielen Fällen ergibt sich das beste Ergebnis, wenn die erste Ebene vertikal verläuft.

Weiterhin ist es sehr vorteilhaft, wenn - im Unterschied zu den vorbekannten Lösungen im Stand der Technik, bei denen meist quer zur Bewegungsrichtung des Substrats oszillierende Verteilorgane zum Einsatz kommen - das Verteilorgan ortsfest gehalten wird.

Bevorzugt gibt das Verteilorgan über der Breite des ersten Bahnabschnitts quer zur Förderrichtung über eine Anzahl Austragsdüsen eine Anzahl Strahlen an Reaktivgemisch ab, wobei der Abstand der beiden seitlichen äußersten Strahlen am Ort der Benetzung des ersten Bahnabschnitts um mindestens 25 % größer ist als der Abstand der beiden seitlich äußersten Strahlen am Ort des Austritts des Reaktivgemisches aus den Austragsdüsen. Das Reaktivgemisch kann dabei durch mindestens drei Austragsdüsen, die jeweils einen Strahl an Reaktivgemisch austragen, ausgetragen werden.

Es ist alternativ aber auch möglich, dass das Verteilorgan über der Breite des ersten Bahnabschnitts quer zur Förderrichtung über eine Breitschlitzdüse einen Strahlbereich an Reaktivgemisch abgibt, wobei der Abstand der beiden seitlichen äußersten Enden des Strahlbereichs am Ort der Benetzung des ersten Bahnabschnitts um mindestens 25 % größer ist als der Abstand der beiden seitlich äußersten Enden des Strahlbereichs am Ort des Austritts des Reaktivgemisches aus den Austragsdüsen.

Bei dem genannten ersten zu benetzenden Bahnabschnitt kann es sich sowohl um das spätere Decksubstrat als auch um das Bodensubstrat handeln. Entscheidend ist lediglich, dass dieses Substrat am Ort der Benetzung entlang der genannten ersten Ebene verläuft, die gegenüber der horizontalen Ebene um mindestens 60° geneigt ist, und dass die Geschwindigkeitskomponente des Geschwindigkeitsvektors des zu benetzenden ersten Bahnabschnitts in Richtung der Erdbeschleunigung im Bereich der Benetzung mit Reaktivgemisch positiv ist.

Bei dem mindestens einen Verteilorgan kann es sich - wie erwähnt - sowohl um eine Breitschlitzdüse, die einen durchgehenden Film erzeugt, als auch um ein Verteilorgan mit mehreren getrennten Düsen, die mehrerer Einzelstrahlen erzeugen, handeln. In Hinblick auf den Einsatz Flachstrahldüsen, welche einen durchgehenden Film erzeugen, ist unter einem Strahl also nicht zwingend kein diskreter Strahl zu verstehen, sondern lediglich der Bereich des aus dem Verteilorgan austretenden Flachstrahls.

Die Austrittsgeschwindigkeit des Reaktivgemisches an dem mindestens einen Verteilorgan (im Bereich der Einzel- oder der Breitschlitzdüsen) beträgt bevorzugt zwischen 1 m/s und 6 m/s beträgt.

Im Sinne eines ruhigen Gemischauftrags ohne Blaseneinschlag auf das im Wesentlichen vertikal verlaufende Substrat hat es sich als vorteilhaft erwiesen, wenn die entlang der Düsenachsen in Richtung des Gemischaustritts verlaufenden Vektoren gegenüber der Horizontalen nach unten geneigt sind. Das Reaktivgemisch wird dabei also bevorzugt aus den Austragsdüsen so ausgetragen, dass der Geschwindigkeitsvektor des Reaktivgemisches am Düsenaustritt eine Komponente aufweist, die vertikal nach unten gerichtet ist. Da das Reaktivgemisch aufgrund seiner Schwerkraft entlang des Substrats nach der Benetzung nach unten strömt, ist es vorteilhaft, wenn auch die auftreffenden Strahlen bereits nach unten orientiert sind.

Als besonders vorteilhaft hat es sich erwiesen, wonach die auf eine weitere Ebene (E₂), die dadurch definiert ist, dass sie sowohl orthogonal zur Ebene des Bahnabschnitts (E₁) als auch orthogonal zur horizontalen Ebene verläuft, projizierten Düsenachsen (der Einzeldüsen oder der Breitschlitzdüse) mit dem Erdbeschleunigungsvektor einen Winkel zwischen 20° und 80° bilden. Demgemäß schließt der Geschwindigkeitsvektor des Reaktivgemisches am Düsenaustritt in besagter Projektion den genannten Winkel ein. Die Komponente dieses Geschwindigkeitsvektors ist dabei in Richtung der Erdbeschleunigung positiv.

An den mit Reaktivgemisch benetzten ersten Bahnabschnitt wird bevorzugt ein zweiter Bahnabschnitt herangeführt, wobei dieser mit dem Reaktivgemisch benetzt wird und wobei das Reaktivgemisch anschließend zwischen den beiden Bahnabschnitten ausreagiert. Demgemäß wird in dieser vorteilhaften Ausgestaltung im Anschluss an die Benetzung mit Reaktivgemisch das weitere Substrat mit dem Reaktivgemisch benetzt, wobei das Reaktivgemisch dann zwischen den beiden Substraten zum Strang ausreagiert.

Die beiden Bahnabschnitte bilden dabei bevorzugt in dem Bereich, in dem der zweite Bahnabschnitt mit dem Reaktivgemisch benetzt wird, einen einstellbaren Spalt miteinander aus. Dieser Kalibrierspalt ermöglicht in Verbindung mit der Vorverteilung eine nahezu perfekte Masseverteilung selbst dünner Filme über relativ große Breiten, so dass sich mit dieser Kombination ein sehr großes Anwendungsspektrum erschließen lässt.

Um das Reaktivgemisch insgesamt möglichst gleichmäßig über die Breite auf das Substrat aufzutragen, kann man das Gemisch - wie erwähnt - bevorzugt über eine Vielzahl von (Einzel)Düsen austragen. Eine zu große Anzahl von Düsen führt jedoch dazu, dass über jede Düse nur noch eine sehr geringe Menge strömt und die Düsendurchmesser damit sehr klein werden können. Eine sehr geringe Anzahl an Düsen hingegen führt dazu, dass der Abstand zwischen zwei Strahlen auf dem Substrat sehr groß wird, was das Zusammenfließen der Strahlen im weiteren Verlauf erschwert. Als guter Kompromiss zwischen den beiden Extremen hat es sich für viele Aufgabenstellungen bewährt, dass die Strahlen jeweils in einem Abstand zwischen 40 mm und 250 mm auf besagtes zu benetzendes Substrat, d. h. auf den ersten Bahnabschnitt, auftreffen.

Das zunächst in Form einzelner Strahlen auf den ersten Bahnabschnitt ausgetragene Reaktivgemisch ist ferner gemäß einer bevorzugten Ausgestaltung der Erfindung im Bereich des einstellbaren Spalts als durchgehender Film ausgebildet.

Das vorgeschlagene erfindungsgemäße Verfahren, bei der das Substrat in dem Bereich, in dem es mit dem Reaktivgemisch benetzt wird, im Wesentlichen in Richtung der Erdbeschleunigung gefördert wird, bringt wesentliche Vorteile dabei, das Reaktivgemisch in einer definierten Breite auf das Substrat aufzutragen. Dies gilt insbesondere dann, wenn das Reaktivgemisch ausgehend von einem zunächst deutlich schmaleren Austrag erst in der Umgebungsatmosphäre, jedoch noch vor dem Benetzen des Substrats, durch entsprechende Strömungen seine gewünschte Breite erreicht. Durch das Auftragen auf ein im Wesentlichen vertikal gefördertes Substrat wird erreicht, dass die im Auftreffpunkt erzielbare Breite unabhängig vom Erdschwerefeld ist, zumindest in deutlich größerem Maße als bei einem horizontal geförderten Substrat.

Das Reaktivgemisch, das in der Umgebungsatmosphäre in die Breite strömt, wird unabhängig vom Verlauf des zu benetzenden Substrats natürlich stets in Richtung der Erdbeschleunigung beschleunigt.

Wenn das Substrat aber im Bereich der Benetzung im Wesentlichen parallel zur Erdbeschleunigung bewegt wird, hat die Erdbeschleunigung keinen nennenswerten Einfluss mehr auf die Breite, mit der das Reaktivgemisch auf das Substrat auftrifft. Dadurch ist die erzielbare Breite vorteilhaft nahezu ausschließlich durch die Richtung der Strömungsvektoren des austretenden Reaktivgemisches bestimmt.

Wenn das Substrat hingegen im Bereich der Benetzung im Wesentlichen orthogonal zur Erdbeschleunigung bewegt wird, hängt die erzielbare Breite neben der Richtung der Strömungsvektoren auch wesentlich vom Betrag der Strömungsvektoren ab. Bei Änderung der Austrittsgeschwindigkeit (z. B. in Folge einer Mengenänderung) ändert sich die Breite nachteilig.

Wie erläutert, sieht eine vorteilhafte Ausgestaltung des Verfahrens vor, dass das Reaktivgemisch über Düsen in Form von mindestens drei voneinander getrennten Strahlen ausgetragen wird. In diesem Fall ist der Punkt, an dem die Strahlen das Substrat benetzen, auch unabhängig von Oberflächenspannungseffekten, wie sie beispielsweise bei Breitschlitzdüsen auftreten. Die Höhe des Punktes, an dem die Strahlen auf das Substrat auftreffen, ist zwar abhängig vom Abstand der Düsen zum Substrat sowie von der Austrittsgeschwindigkeit der Strahlen, das hat aber im Prinzip keinen Einfluss auf die erzielte Breitenverteilung. Dadurch lässt sich auf sehr einfache Weise gezielt jede gewünschte Breitenverteilung erzielen.

Wie beschrieben, hat die Austrittsgeschwindigkeit der Düsenstrahlen zwar prinzipiell keinen Einfluss auf die Breite, bei welcher die Düsenstrahlen auf das Substrat auftreffen, aber auf die Höhe. Wenn die Düsenstrahlen mit sehr geringer Geschwindigkeit aus der Düse austreten, führt dies dazu, dass insbesondere die Strahlen, die weit nach außen fliegen sollen, aufgrund der Erdbeschleunigung sehr weit nach unten abknicken bzw. abgelenkt werden. Um diesen Effekt zu minimieren, ist es vorteilhaft, wenn die Strahlen mit einer Geschwindigkeit von mindestens 1 m/s aus der Düse austreten.

Gleichzeitig führt eine zu hohe Geschwindigkeit allerdings dazu, dass das Reaktivgemisch beim Auftreffen auf das Substrat spritzen kann, was ebenfalls nicht erwünscht ist. Erwünscht ist ein möglichst beruhigter Gemischauftrag auf das Substrat. Deshalb ist es vorteilhaft, wenn die Strahlen - wie oben erwähnt - mit einer Geschwindigkeit von maximal 6 m/s aus der Düse austreten.

Verbunden mit der Geschwindigkeit sowie der gewünschten Breite, auf der das Substrat benetzt werden soll, ist die Flugzeit des Reaktivgemisches vom Düsenausgang bis auf den Bahnabschnitt. Diese hat wegen der Erdbeschleunigung einen direkten Einfluss darauf, wie weit der Strahl nach unten abknickt bzw. ausgelenkt wird. Es ist daher bevorzugt vorgesehen, dass die Flugzeit der äußeren Strahlen maximal 0,2 Sekunden, bevorzugt maximal 0,15 Sekunden, beträgt.

In den Zeichnungen ist ein Ausführungsbeispiel der Erfindung dargestellt. Es zeigen:

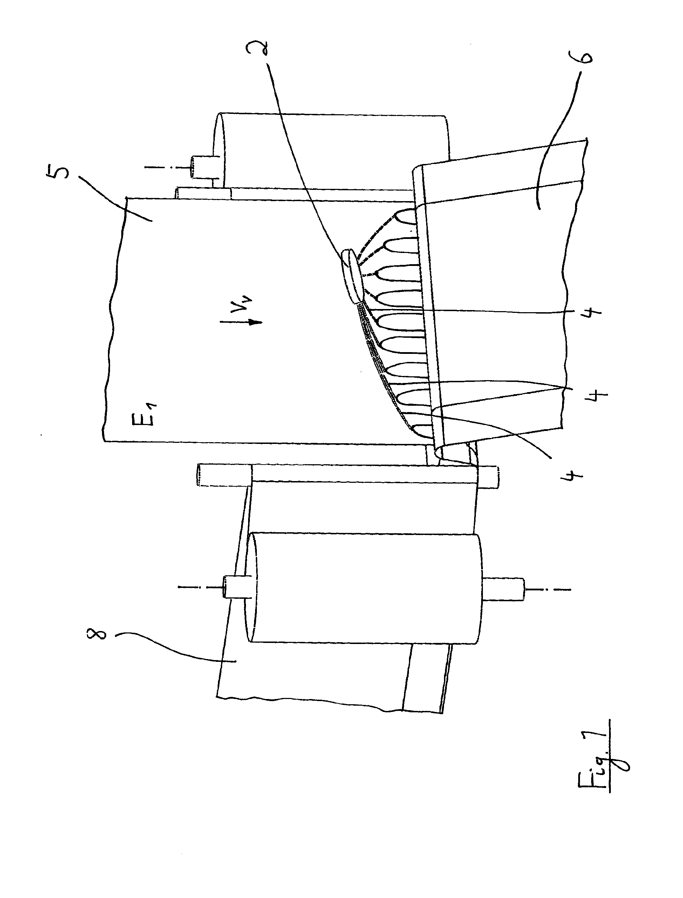

- Fig. 1: schematisch in perspektivischer Ansicht einen Bereich einer Anlage zur Herstellung eines Endlosstranges aus Polyurethan-Reaktivkunststoff,
- Fig. 2: die Draufsicht auf den Anlagenteil gemäß Fig. 1,
- Fig. 3: schematisch in der Seitenansicht die Anlage gemäß Fig. 1 und
- Fig. 4: einen vergrößerten Ausschnitt aus Fig. 1.

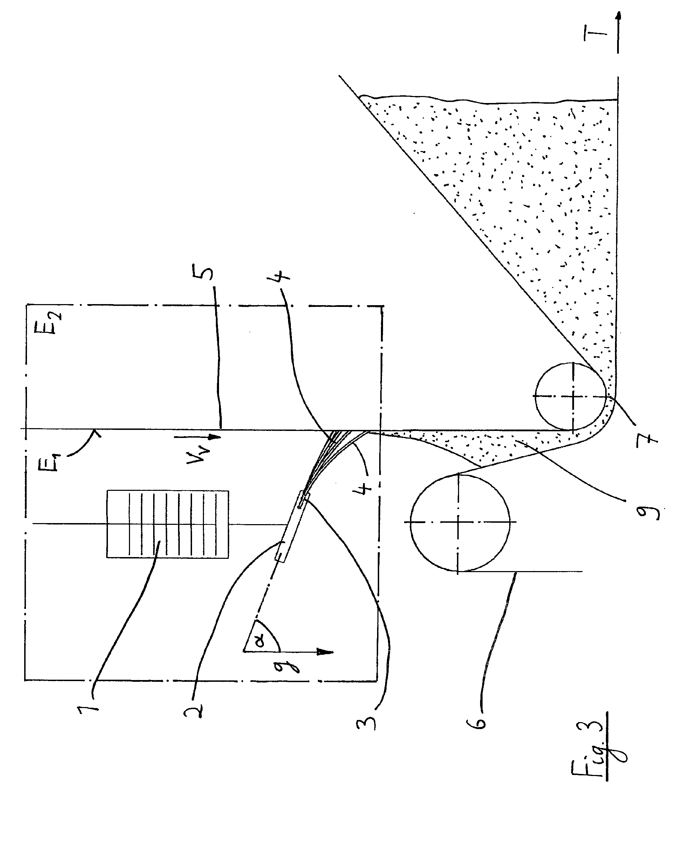

In den Figuren ist zu erkennen, dass zunächst ein Polyurethan-Reaktivgemisch in einem Mischer 1 (s. Fig. 3) hergestellt wird. Das Reaktivgemisch wird zu einem Verteilorgan (Verteildüse) 2 geführt, das im Ausführungsbeispiel über eine Anzahl Austragsdüsen 3 verfügt. Über diese Austragsdüsen 3 wird das Reaktivgemisch in Form diskreter Strahlen 4 ausgetragen und auf einen ersten Bahnabschnitt 5 aufgebracht, der im Ausführungsbeispiel vertikal von oben nach unten verläuft. Die Geschwindigkeitskomponente vᵥ in Richtung der Erdbeschleunigung g (s. Fig. 3) entspricht hier also der Fördergeschwindigkeit des ersten Bahnabschnitts 5. Der erste Bahnabschnitt 5 verläuft dabei jeweils in seine Förderrichtung T.

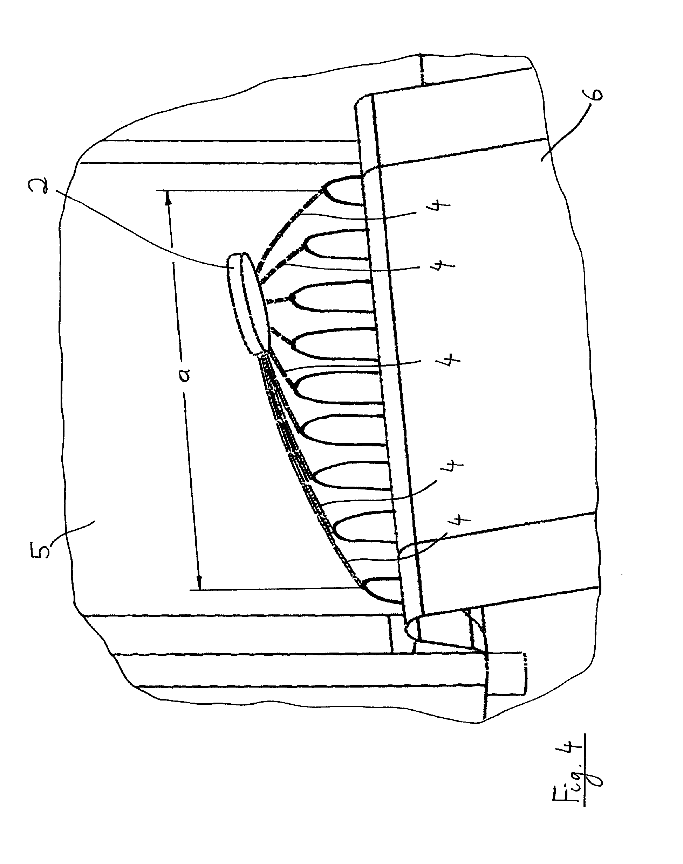

Wie sich am besten aus Fig. 4 ergibt, weist das Verteilorgan 2 insgesamt neun austretenden Düsenstrahlen 4 auf, die also den vertikal verlaufenden ersten Bahnabschnitt 5 benetzen. Das in diesem Bereich vertikal verlaufende Substrat, das auch als Deckpapier bezeichnet werden könnte, bildet im weiteren Verlauf mit einem zweiten Bahnabschnitt 6, das auch als Bodenpapier bezeichnet werden könnte, einen Spalt 7 aus, vor dem sich das Reaktionsgemisch leicht anstauen kann, so dass spätestens im Spalt 7 auch der zweite Bahnabschnitt 6 mit dem Reaktionsgemisch benetzt ist. Von den Seiten her werden zusätzlich noch weitere Seiten-Bahnabschnitte 8, die auch als Seitenpapier bezeichnet werden könnten, zugeführt.

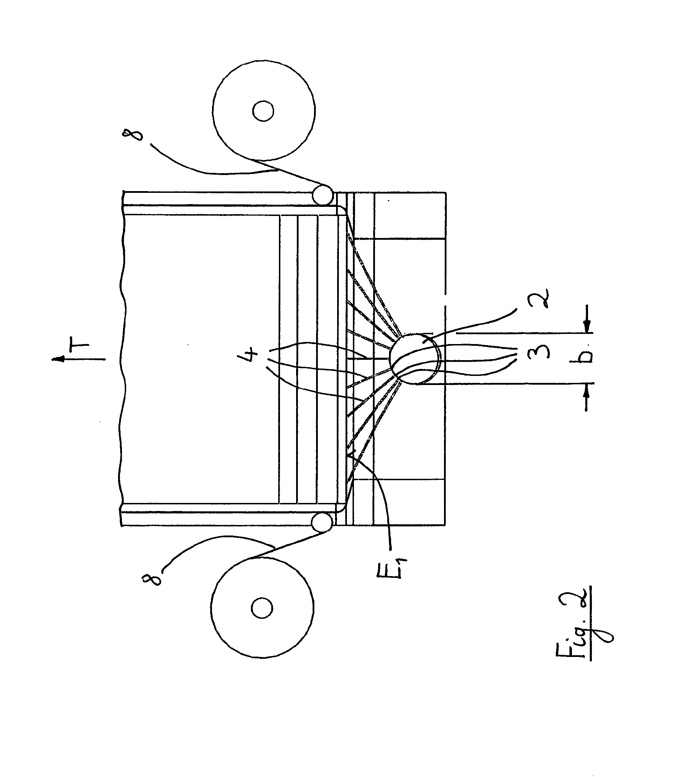

Wesentlich ist, dass der Abstand a (s. Fig. 4) der beiden seitlich äußersten Strahlen 4 am Ort der Benetzung des ersten Bahnabschnitts 5 um mindestens 25 % größer ist als der Abstand b (s. Fig. 2) der beiden seitlich äußersten Strahlen 4 am Ort des Austritts des Reaktivgemisches aus dem Verteilorgan 2. Ferner muss der zu benetzende erste Bahnabschnitt 5 hinreichend steil geführt werden, d. h. der erste Bahnabschnitt 5 verläuft im Bereich der Benetzung mit dem Reaktivgemisch entlang einer ersten Ebene E₁, die gegenüber der horizontalen Ebene um mindestens 60° geneigt ist (im Ausführungsbeispiel sind es 90°). Ferner ist es wesentlich, dass die Geschwindigkeitskomponente vᵥ des Geschwindigkeitsvektors des zu benetzenden ersten Bahnabschnitts 5 in Richtung der Erdbeschleunigung g im Bereich der Benetzung mit Reaktivgemisch positiv ist.

Wenn man eine zweite Ebene E₂ definiert, die einerseits senkrecht auf der Horizontalen und andererseits senkrecht auf der genannten ersten Ebene E₁ steht, und projiziert man - wie in Fig. 3 zu erkennen - den Geschwindigkeitsvektor des Reaktivgemisches am Ausgang der Austragsdüsen 3 auf diese Ebene E₂, liegt zwischen dieser Projektion und der Richtung der Erdbeschleunigung g ein Winkel α vor. Dieser sollte zwischen 20° und 80° liegen.

In Fig. 2 ist zu erkennen, dass die Abstände, in dem die Strahlen 4 auf den ersten Bahnabschnitt 5 auftreffen, unabhängig vom Schwerkrafteinfluss sind. Durch diesen werden die Strahlen 4 allerdings - wie am besten in Fig. 3 gesehen werden kann - nach unten abgeknickt bzw. abgelenkt. Dadurch wird die vorgeschlagene Verfahrensweise unabhängig von den Austrittsgeschwindigkeiten der Strahlen 4 an den Austragsdüsen 3, was einen großen Vorteil darstellt, da auf den in Rede stehenden Anlagen in der Regel viele unterschiedliche Rezepturen und entsprechend auch Austragsmengen gefahren werden müssen.

In Fig. 3 ist erkennbar, wie das Reaktivgemisch durch die nach unten geneigten Austragsdüsen 3 aus dem Verteilorgan 2 in die Umgebungsatmosphäre austreten und anschließend den vertikal nach unten geförderten ersten Bahnabschnitt 5 benetzen. Zu erkennen ist weiter, dass die äußeren Strahlen 4 wegen des längeren Flug-Weges und folglich wegen der längeren Flugzeit aufgrund der Erdbeschleunigung g an einer tieferen Stelle auf den ersten Bahnabschnitt 5 auftreffen. Wie jedoch in Fig. 2 zu erkennen ist, hat dies keinen Einfluss auf die Breitenverteilung des Reaktivgemisches auf dem zu benetzendem Substrat 5.

Das Reaktivgemisch strömt anschließend in ein Becken 9, in dem das Reaktivgemisch vor dem einstellbaren Spalt 7 zwischen dem Bodenpapier 6 und dem Deckpapier 5 leicht angestaut werden kann, wodurch die einzelnen Bahnen aus Reaktivgemisch zu einem durchgehenden Film vereinigt werden.

### Bezugszeichenliste:

- 1: Mischer
- 2: Verteilorgan
- 3: Austragsdüsen
- 4: Strahl
- 5: erster Bahnabschnitt
- 6: zweiter Bahnabschnitt
- 7: Spalt
- 8: Seiten-Bahnabschnitt
- 9: Becken

- T: Förderrichtung
- a: Abstand
- b: Abstand
- E₁: erste Ebene
- E₂: zweite Ebene
- vᵥ: Geschwindigkeitskomponente in Richtung der Erdbeschleunigung
- g: Erdbeschleunigung
- α: Winkel

## Patentansprüche

1. Verfahren zum kontinuierlichen Herstellen eines Stranges aus Reaktivkunststoff,
a) bei dem zunächst mindestens zwei Reaktivkomponenten, insbesondere Polyol und Isocyanat, dosiert einem Mischer (1) zugeführt werden,
b) bei dem dann die Reaktivkomponenten im Mischer (1) zu einem Reaktivgemisch vermischt werden,
c) bei dem anschließend das Reaktivgemisch über mindestens ein Verteilorgan (2) in die Umgebungsatmosphäre ausgetragen wird und
d) bei dem ein kontinuierlich in eine Förderrichtung (T) geförderter erster Bahnabschnitt (5) aus einem flächigen, flexiblen Material, insbesondere eine Papier-, Folien- oder Gewebebahn, mit dem Reaktivgemisch benetzt wird, wobei das mindestens eine Verteilorgan (2) den ersten Bahnabschnitt (5) in einer Richtung quer zur Förderrichtung (T) über eine vorgegebene Breite benetzt,
**dadurch gekennzeichnet, dass**
der zu benetzende erste Bahnabschnitt (5) im Bereich der Benetzung mit Reaktivgemisch entlang einer ersten Ebene (E₁) verläuft, die gegenüber der horizontalen Ebene um mindestens 60° geneigt ist, und
dass die Geschwindigkeitskomponente (vᵥ) des Geschwindigkeitsvektors des zu benetzenden ersten Bahnabschnitts (5) in Richtung der Erdbeschleunigung (g) im Bereich der Benetzung mit Reaktivgemisch positiv ist.

2. Verfahren nach Anspruch 1, **dadurch gekennzeichnet, dass** die erste Ebene (E₁) gegenüber der horizontalen Ebene um mindestens 65° geneigt ist, vorzugsweise um mindestens 75°.

3. Verfahren nach Anspruch 2, **dadurch gekennzeichnet, dass** die erste Ebene (E₁) vertikal verläuft.

4. Verfahren nach einem der Ansprüche 1 bis 3, **dadurch gekennzeichnet, dass** das Verteilorgan (2) ortsfest gehalten wird.

5. Verfahren nach einem der Ansprüche 1 bis 4, **dadurch gekennzeichnet, dass** das Verteilorgan (2) über der Breite des ersten Bahnabschnitts (5) quer zur Förderrichtung (T) über eine Anzahl Austragsdüsen (3) eine Anzahl Strahlen (4) an Reaktivgemisch abgibt, wobei der Abstand (a) der beiden seitlichen äußersten Strahlen (4) am Ort der Benetzung des ersten Bahnabschnitts (5) um mindestens 25 % größer ist als der Abstand (b) der beiden seitlich äußersten Strahlen (4) am Ort des Austritts des Reaktivgemisches aus den Austragsdüsen (3).

6. Verfahren nach Anspruch 5, **dadurch gekennzeichnet, dass** das Reaktivgemisch durch mindestens drei Austragsdüsen (3) des Verteilorgans (2), die jeweils einen Strahl (4) an Reaktivgemisch austragen, ausgetragen wird.

7. Verfahren nach einem der Ansprüche 1 bis 4, **dadurch gekennzeichnet, dass** das Verteilorgan (2) über der Breite des ersten Bahnabschnitts (5) quer zur Förderrichtung (T) über eine Breitschlitzdüse einen Strahlbereich an Reaktivgemisch abgibt, wobei der Abstand (a) der beiden seitlichen äußersten Enden des Strahlbereichs am Ort der Benetzung des ersten Bahnabschnitts (5) um mindestens 25 % größer ist als der Abstand (b) der beiden seitlich äußersten Enden des Strahlbereichs am Ort des Austritts des Reaktivgemisches aus den Austragsdüsen (3).

8. Verfahren nach einem der Ansprüche 1 bis 7, **dadurch gekennzeichnet, dass** die Austrittsgeschwindigkeit des Reaktivgemisches aus dem Verteilorgan (2) zwischen 1 m/s und 6 m/s beträgt.

9. Verfahren nach einem der Ansprüche 1 bis 8, **dadurch gekennzeichnet, dass** der Geschwindigkeitsvektor des Reaktivgemisches am Austritt des Verteilorgans (2) in der Projektion auf eine zweite Ebene (E₂), die orthogonal auf der ersten Ebene (E₁) und orthogonal auf der Horizontalen steht, mit dem Vektor der Erdbeschleunigung (g) einen Winkel (α) zwischen 20° und 80° einschließt, wobei die Komponente dieses Geschwindigkeitsvektors in Richtung der Erdbeschleunigung (g) positiv ist.

10. Verfahren nach einem der Ansprüche 1 bis 9, **dadurch gekennzeichnet, dass** an den mit Reaktivgemisch benetzten ersten Bahnabschnitt (5) ein zweiter Bahnabschnitt (6) herangeführt wird, wobei dieser mit dem Reaktivgemisch benetzt wird und wobei das Reaktivgemisch anschließend zwischen den beiden Bahnabschnitten (5, 6) ausreagiert.

11. Verfahren nach Anspruch 10, **dadurch gekennzeichnet, dass** die beiden Bahnabschnitte (5, 6) in dem Bereich, in dem der zweite Bahnabschnitt (6) mit dem Reaktivgemisch benetzt wird, einen einstellbaren Spalt (7) miteinander ausbilden.

12. Verfahren nach einem der Ansprüche 1 bis 11, **dadurch gekennzeichnet, dass** die Strahlen (4) des Reaktivgemisches auf dem ersten Bahnabschnitt (5) in einem Abstand zwischen 40 mm und 250 mm auf dem ersten Bahnabschnitt (5) auftreffen.

13. Verfahren nach Anspruch 11 oder 12, **dadurch gekennzeichnet, dass** das zunächst in Form einzelner Strahlen (4) auf den ersten Bahnabschnitt (5) ausgetragene Reaktivgemisch im Bereich des einstellbaren Spalts (7) als durchgehender Film ausgebildet ist.
